# EUROPÄISCHE PATENTSCHRIFT

(11) **EP 2 310 718 B1**
(45) Veröffentlichungstag und Bekanntmachung des Hinweises auf die Patenterteilung: **09.01.2013**
(21) Anmeldenummer: 09781612.8
(22) Anmeldetag: 07.08.2009
(51) Int. Cl.: F16H 3/66

(54) **MEHRSTUFENGETRIEBE**
MULTI-STAGE GEARBOX
BOÎTE DE VITESSES À PLUSIEURS ÉTAGES

(30) Priorität: 13.08.2008 DE 102008041205
(43) Veröffentlichungstag der Anmeldung: 20.04.2011
(73) Patentinhaber: ZF Friedrichshafen AG, 88038 Friedrichshafen (DE)
(72) Erfinder: ZIEMER, Peter, 88069 Tettnang (DE); HAUPT, Josef, 88069 Tettnang (DE); GUMPOLTSBERGER, Gerhard, 88045 Friedrichshafen (DE); TIESLER, Peter, 88074 Meckenbeuren (DE); DIOSI, Gabor, 88045 Friedrichshafen (DE); BREHMER, Martin, 88069 Tettnang (DE)
(86) Internationale Anmeldenummer: PCT/EP2009/060274
(87) Internationale Veröffentlichungsnummer: WO 2010/018135

(56) Entgegenhaltungen:
- DE-A1- 2 936 969
- DE-A1- 10 115 995
- DE-A1- 10 213 820
- DE-A1- 19 949 507
- DE-A1-102005 010 210
- DE-A1-102006 006 637
- JP-A- 2006 349 153
- US-A1- 2007 202 982

## Beschreibung

Die vorliegend Erfindung betrifft ein Mehrstufengetriebe in Planetenbauweise, insbesondere ein Automatgetriebe für ein Kraftfahrzeug, gemäß dem Oberbegriff des Patentanspruchs 1.

Automatgetriebe, insbesondere für Kraftfahrzeuge, umfassen nach dem Stand der Technik Planetensätze, die mittels Reibungs- bzw. Schaltelementen, wie etwa Kupplungen und Bremsen, geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung, verbunden sind.

Derartige Automatgetriebe sind beispielsweise aus der DE 199 49 507 A1 der Anmelderin ein Mehrstufengetriebe bekannt, bei denen an der Antriebswelle zwei nicht schaltbare Vorschaltradsätze vorgesehen sind, die ausgangsseitig zwei Drehzahlen erzeugen, die neben der Drehzahl der Antriebswelle wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächstfolgenden höheren oder niedrigeren Gang von den beiden gerade betätigten Schaltelementen jeweils nur ein Schaltelement zu- oder abgeschaltet werden muss. Unter Verwendung von fünf Schaltelementen werden hierbei sieben Vorwärtsgänge erzielt, unter Verwendung von sechs Schaltelementen neun oder zehn Vorwärtsgänge.

Des weiteren ist aus der DE 102 13 820 A1 ein Mehrgangautomatikgetriebe mit acht Vorwärtsgängen und einen Rückwärtsgang bekannt, umfassend einen ersten Eingangspfad T1 eines ersten Übersetzungsverhältnisses; einen Eingangspfad T2, der ein größeres Übersetzungsverhältnis als dieser Eingangspfad T1 hat; einen Planetenradsatz vom Typ Ravigneaux mit vier Elementen, wobei die vier Elemente ein erstes Element, ein zweites Element, ein drittes Element und ein viertes Element in der Reihenfolge der Elemente in einem Drehzahldiagramm sind; eine Kupplung C-2, die eine Drehung des Eingangspfads T2 auf das erste Element S3 überträgt; eine Kupplung C-1, die die Drehung von dem Eingangspfad T2 auf das vierte Element S2 überträgt; eine Kupplung C-4, die eine Drehung von dem Eingangspfad T1 auf das erste Element überträgt; eine Kupplung C-3, die die Drehung von dem Eingangspfad T1 auf das zweite Element C3 überträgt; eine Bremse B-1, die den Eingriff des vierten Elements herstellt; eine Bremse B-2, die den Eingriff des zweiten Elements herstellt; und ein Abtriebselement, das mit dem dritten Element S3 gekoppelt ist.

Ein 9-Gang-Mehrstufengetriebe ist ferner aus der DE 29 36 969 A1 bekannt; es umfasst acht Schaltelemente und vier Radsätze, wobei ein Radsatz als Vorschaltgetriebe dient und das Hauptgetriebe einen Simpson-Satz und einen weiteren als Umkehrgetriebe dienenden Radsatz aufweist.

Weitere Mehrstufengetriebe sind beispielsweise aus der DE 102005010210 A1 und der DE102006006637 A1 der Anmelderin bekannt.

Automatisch schaltbare Fahrzeuggetriebe in Planetenbauweise im Allgemeinen sind im Stand der Technik bereits vielfach beschrieben und unterliegen einer permanenten Weiterentwicklung und Verbesserung. So sollen diese Getriebe einen geringen Bauaufwand, insbesondere eine geringe Anzahl an Schaltelementen erfordern und bei sequentieller Schaltweise Doppelschaltungen vermeiden, so dass bei Schaltungen in definierten Ganggruppen jeweils nur ein Schaltelement gewechselt wird. -

Aus der noch nicht veröffentlichten DE 102008000428.3 der Anmelderin ist ein Mehrstufengetriebe in Planetenbauweise bekannt, welches einen Antrieb und einen Abtrieb aufweist, welche in einem Gehäuse angeordnet sind. Bei dem bekannten Getriebe sind zumindest vier Planetensätze, im Folgenden als erster, zweiter, dritter und vierter Planetensatz bezeichnet, mindestens acht drehbare Wellen - im Folgenden als Antriebswelle, Abtriebswelle, dritte, vierte, fünfte, sechste, siebte und achte Welle bezeichnet - sowie zumindest sechs Schaltelemente, umfassend Bremsen und Kupplungen, vorgesehen, deren selektives Eingreifen verschiedene Übersetzungsverhältnisse zwischen dem Antrieb und dem Abtrieb bewirkt, so dass vorzugsweise neun Vorwärtsgänge und ein Rückwärtsgang realisierbar ist.

Hierbei bilden der erste und der zweite Planetensatz, die vorzugsweise als Minus-Planetensätze ausgebildet sind, einen schaltbaren Vorschaltradsatz, wobei der dritte und der vierte Planetensatz einen Hauptradsatz bilden.

Bei dem bekannten Mehrstufengetriebe ist vorgesehen, dass die Stege des ersten und des zweiten Planetensatzes über die vierte Welle miteinander gekoppelt sind, welche mit einem Element des Hauptradsatzes verbunden ist, dass das Hohlrad des ersten Planetensatzes mit dem Sonnenrad des zweiten Planetensatzes über die achte Welle gekoppelt ist, welche über eine erste Kupplung mit der Antriebswelle lösbar verbindbar ist und dass das Sonnenrad des ersten Planetenradsatzes mittels der dritten Welle über eine erste Bremse an ein Gehäuse des Getriebes ankoppelbar und über eine zweite Kupplung mit der Antriebswelle lösbar verbindbar ist, wobei das Hohlrad des zweiten Planetensatzes mittels der fünften Welle über eine zweite Bremse an ein Gehäuse des Getriebes ankoppelbar ist. Zudem ist die siebte Welle mit zumindest einem Element des Hauptradsatzes ständig verbunden und über eine dritte Bremse an ein Gehäuse des Getriebes ankoppelbar, wobei die sechste Welle mit zumindest einem weiteren Element des Hauptradsatzes ständig verbunden und über eine dritte Kupplung mit der Antriebswelle lösbar verbindbar ist; die Abtriebswelle ist mit zumindest einem weiteren Element des Hauptradsatzes ständig verbunden.

Vorzugsweise ist bei dem bekannten Getriebe die vierte Welle ständig mit dem Hohlrad des dritten Planetensatzes verbunden, wobei die sechste Welle ständig mit dem Hohlrad des vierten Planetensatzes und dem Steg des dritten Planetensatzes verbunden und über die dritte Kupplung mit der Antriebswelle lösbar verbindbar ist. Ferner ist die siebte Welle ständig mit den Sonnenrädern des dritten und vierten Planetensatzes verbunden und über die dritte Bremse an ein Gehäuse des Getriebes ankoppelbar. Der Abtrieb erfolgt hierbei über die ständig mit dem Steg des vierten Planetensatzes verbundene Abtriebswelle. Des weiteren können der dritte und der vierte Planetensatz zu einem Ravigneaux-Satz mit gemeinsamen Steg und gemeinsamen Hohlrad zusammengesetzt bzw. reduziert sein.

Die Merkmale des Oberbegriffs des Anspruchs 1 sind in der DE 101 15 995 A1 offenbart.

Der vorliegenden Erfindung liegt die Aufgabe zugrunde, ein Mehrstufengetriebe der eingangs genannten Art vorzuschlagen, welches neun Vorwärtsgänge und einen Rückwärtsgang mit ausreichender Übersetzung aufweist, bei dem der Bauaufwand und die Baugröße, insbesondere die Baulänge, bzw. das Gewicht optimiert werden und zudem der Wirkungsgrad hinsichtlich der Schlepp- und Verzahnungsverluste verbessert wird. Zudem sollen bei dem erfindungsgemäßen Mehrstufengetriebe geringe Stützmomente auf die Schaltelemente wirken. Insbesondere soll das erfindungsgemäße Getriebe für eine Front-Quer-Bauweise geeignet sein.

Diese Aufgabe wird erfindungsgemäß durch die Merkmale des Patentanspruchs 1 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschlagen, welches einen Antrieb und einen Abtrieb aufweist, welche in einem Gehäuse angeordnet sind. Des weiteren sind zumindest vier Planetensätze, im Folgenden als erster, zweiter, dritter und vierter Planetensatz bezeichnet, wobei der erste Planetensatz vorzugsweise als Plus-Planetensatz bezeichnet, wobei der erste Planetensatz vorzugsweise als Plus-Planetensatz ausgeführt ist und die weiteren Planetensätze als Minus - Planetensätze ausgeführt sind, mindestens acht drehbare Wellen - im Folgenden als Antriebswelle, Abtriebswelle, dritte, vierte, fünfte, sechste, siebte und achte Welle bezeichnet - sowie zumindest sechs Schaltelemente, umfassend Bremsen und Kupplungen, vorgesehen, deren selektives Eingreifen verschiedene Übersetzungsverhältnisse zwischen dem Antrieb und dem Abtrieb bewirkt, so dass vorzugsweise neun Vorwärtsgänge und ein Rückwärtsgang realisierbar ist.

Ein einfacher Minus-Planetensatz umfasst bekanntlich ein Sonnenrad, ein Hohlrad und einen Steg, an dem Planetenräder verdrehbar gelagert sind, die jeweils mit Sonnenrad und Hohlrad kämmen. Hierdurch weist das Hohlrad bei festgehaltenem Steg eine zum Sonnenrad entgegengesetzte Drehrichtung auf. Demgegenüber umfasst ein einfacher Plus-Planetensatz ein Sonnenrad, ein Hohlrad und einen Steg, an dem innere und äußere Planetenräder verdrehbar gelagert sind, wobei alle inneren Planetenräder mit dem Sonnenrad und alle äußeren Planetenräder mit dem Hohlrad kämmen, wobei jedes innere Planetenrad mit jeweils einem äußeren Planetenrad kämmt. Hierdurch weist das Hohlrad bei festgehaltenem Steg die gleiche Drehrichtung auf wie das Sonnenrad.

Gemäß der Erfindung ist vorgesehen, dass das Sonnenrad des ersten Planetensatzes mit der über eine erste Bremse an das Gehäuse des Getriebes ankoppelbaren fünften Welle verbunden ist und dass der Steg des ersten Planetensatzes mit der achten Welle verbunden ist, die mit dem Steg des zweiten Planetensatzes verbunden und über eine erste Kupplung mit der Antriebswelle lösbar verbindbar ist, wobei die Antriebswelle über eine zweite Kupplung mit der sechsten Welle und über eine dritte Kupplung mit der vierten Welle lösbar verbindbar ist. Hierbei ist die sechste Welle mit dem Hohlrad des dritten Planetensatzes verbunden, wobei die vierte Welle über eine zweite Bremse an das Gehäuse des Getriebes ankoppelbar ist und mit dem Sonnenrad des vierten Planetensatzes und dem Sonnenrad des dritten Planetensatzes verbunden ist.

Des weiteren ist das Hohlrad des ersten Planetensatzes mit der Abtriebswelle verbunden, welche mit dem Hohlrad des zweiten Planetensatzes verbunden ist, wobei der Steg des dritten Planetensatzes mit der siebten Welle verbunden ist, die mit einem Bauteil verbunden ist, welches das Hohlrad des vierten Planetensatzes und das Sonnenrad des zweiten Planetensatzes miteinander verbindet. Erfindungsgemäß ist der Steg des vierten Planetensatzes mit der dritten Welle verbunden, die über eine dritte Bremse an das Gehäuse des Getriebes ankoppelbar ist.

Im Rahmen einer Weiterbildung der Erfindung sind der erste Planetensatz und der zweite Planetensatz zu einem Ravigneaux - Satz mit gemeinsamen Steg und gemeinsamen Hohlrad zusammengefasst bzw. reduziert.

Durch die erfindungsgemäße Ausgestaltung des Mehrstufengetriebes ergeben sich insbesondere für Personenkraftwagen geeignete Übersetzungen sowie eine erhebliche Erhöhung der Gesamtspreizung des Mehrstufengetriebes, wodurch eine Verbesserung des Fahrkomforts und eine signifikante Verbrauchsabsenkung bewirkt werden.

Darüber hinaus wird mit dem erfindungsgemäßen Mehrstufengetriebe durch eine geringe Anzahl an Schaltelementen, der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Vorwärtsgang und im Rückwärtsgang betätigt wird.

Des weiteren ergibt sich bei dem erfindungsgemäßen Mehrstufengetriebe ein guter Wirkungsgrad in den Hauptfahrgängen bezüglich der Schlepp- und Verzahnungsverluste.

Ferner liegen geringe Momente in den Schaltelementen und in den Planetensätzen des Mehrstufengetriebes vor, wodurch der Verschleiß bei dem Mehrstufengetriebe in vorteilhafter Weise reduziert wird. Zudem wird durch die geringen Momente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetensätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im Folgenden anhand der beigefügten Figuren beispielhaft näher erläutert. In diesen stellen dar:
- Figur 1:: Eine schematische Ansicht einer bevorzugten Ausführungsform eines erfindungsgemäßen Mehrstufengetriebes;
- Figur 2:: Eine schematische Ansicht einer weiteren bevorzugten Ausführungsform eines erfindungsgemäßen Mehrstufengetriebes;
- Figur 3:: Ein Detailansicht der Anordnung der Schaltelemente 04, 14 und 16 gemäß einer weiteren Ausführungsform der Erfindung,
- Figur 4:: Ein beispielhaftes Schaltschema für ein Mehrstufengetriebe gemäß Figuren 1, 2 und 3; und
- Figur 5:: Ein Diagramm zur Veranschaulichung des der jeweiligen Übersetzung i eines Ganges entsprechenden Stufensprungs phi für das in Figuren 1, 2 und 3 gezeigte Getriebe.

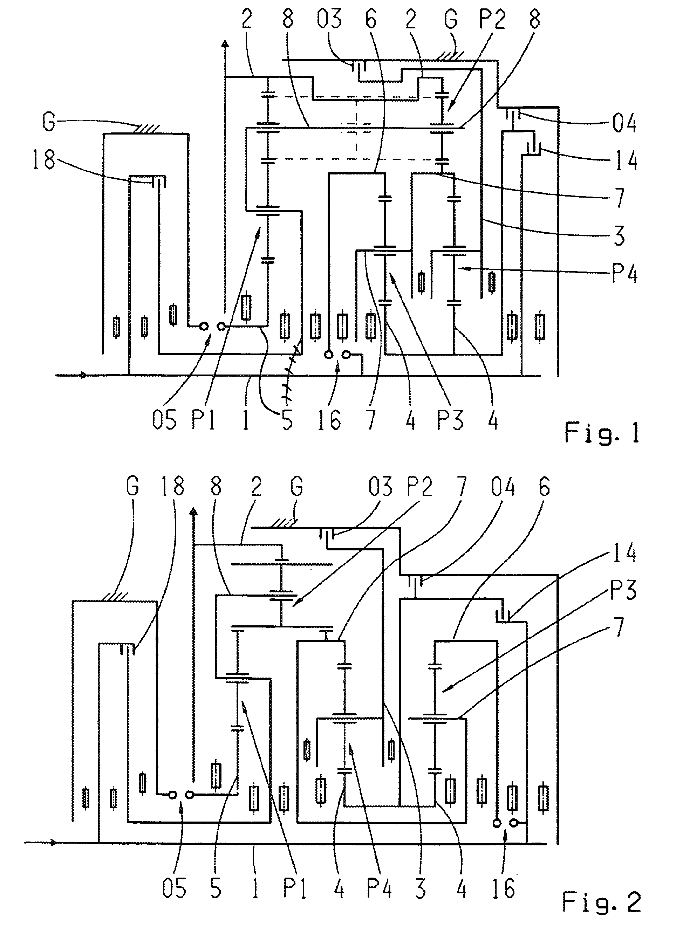

In Figur 1 ist ein erfindungsgemäßes Mehrstufengetriebe mit einer Antriebswelle 1 und einer Abtriebswelle 2 dargestellt, welche in einem Gehäuse G angeordnet sind. Es sind vier Planetensätze P1, P2, P3 und P4 vorgesehen, wobei die Planetensätze P2, P3 und P4 als Minus-Planetensätze ausgebildet sind und der Planetensatz P1 als Plus-Planetensatz ausgeführt ist.

Bei dem in Figur 1 gezeigten Ausführungsbeispiel, das sich insbesondere für eine Front-Quer-Bauweise eignet, sind der zweite und der vierte Planetensatz P2, P4 axial betrachtet in der gleichen Radsatzebene angeordnet, wobei der zweite Planetensatz P2 radial betrachtet über dem vierten Planetensatz P4 angeordnet ist, wodurch sich die insgesamt vier Planetensätze in vorteilhafter Weise räumlich axial betrachtet auf drei Radsatzebenen beschränken. Hierbei ist das Hohlrad des vierten Planetensatzes P4 über ein Bauteil mit dem Sonnenrad des zweiten Planetensatzes P2 verbunden. Axial betrachtet sind in diesem Fall die Planetensätze in der Reihenfolge P1, P3, P4/P2 angeordnet; der dritte Planetensatz P3 ist zwischen dem ersten Planetensatz P1 und den radial übereinander angeordneten Planetensätzen P4/P2 angeordnet.

Wie aus Figur 1 ersichtlich, sind sechs Schaltelemente, nämlich drei Bremsen 03, 04, 05 und drei Kupplungen 14, 16 und 18 vorgesehen. Die räumliche Anordnung der Schaltelemente kann beliebig sein und wird nur durch die Abmessungen und die äußere Formgebung begrenzt.

Mit diesen Schaltelementen ist ein selektives Schalten von neun Vorwärtsgängen und einem Rückwärtsgang realisierbar. Das erfindungsgemäße Mehrstufengetriebe weist insgesamt acht drehbare Wellen auf, nämlich die Wellen 1, 2, 3, 4, 5, 6, 7 und 8, wobei die Antriebswelle die erste Welle und die Abtriebswelle die zweite Welle des Getriebes bildet.

Erfindungsgemäß ist bei dem Mehrstufengetriebe gemäß Figur 1 vorgesehen, dass das Sonnenrad des ersten Planetensatzes P1 mit der über eine erste Bremse 05 an das Gehäuse G des Getriebes ankoppelbaren fünften Welle 5 verbunden ist und dass der Steg des ersten Planetensatzes P1 mit der achten Welle 8 verbunden ist, die mit dem Steg des zweiten Planetensatzes P2 verbunden ist und über eine erste Kupplung 18 mit der Antriebswelle 1 lösbar verbindbar ist, wobei die Antriebswelle 1 über eine zweite Kupplung 16 mit der sechsten Welle 6 und über eine dritte Kupplung 14 mit der vierten Welle 4 lösbar verbindbar ist. Hierbei ist die sechste Welle 6 mit dem Hohlrad des dritten Planetensatzes P3 verbunden, wobei die vierte Welle 4 über eine zweite Bremse 04 an das Gehäuse G des Getriebes ankoppelbar ist und mit dem Sonnenrad des vierten Planetensatzes P4 und dem Sonnenrad des dritten Planetensatzes P3 verbunden ist.

Des weiteren ist das Hohlrad des ersten Planetensatzes P1 mit der Abtriebswelle 2 verbunden, die mit dem Hohlrad des zweiten Planetensatzes P2 verbunden ist, wobei der Steg des dritten Planetensatzes P3 mit der siebten Welle 7 verbunden ist, die mit dem Bauteil verbunden ist, welches das Hohlrad des vierten Planetensatzes P4 und das Sonnenrad des zweiten Planetensatzes P2 miteinander verbindet. Erfindungsgemäß ist der Steg des vierten Planetensatzes P4 mit der dritten Welle 3 verbunden, die über eine dritte Bremse 03 an ein Gehäuse G des Getriebes ankoppelbar ist.

Bei dem gezeigten Beispiel ist die erste Kupplung 18 in Kraftflussrichtung im Zugbetrieb betrachtet vor dem ersten Planetensatz P1 angeordnet, wobei die erste Bremse 05 in Kraftflussrichtung im Zugbetrieb betrachtet vor dem ersten Planetensatz P1 angeordnet ist.

Des weiteren ist die dritte Kupplung 14 radial betrachtet unterhalb der zweiten Bremse 04 angeordnet und kann mit der zweiten Bremse 04 einen gemeinsamen Innenlamellenträger aufweisen. Ferner ist die zweite Kupplung 16 axial betrachtet zwischen dem ersten Planetensatz P1 und dem dritten Planetensatz P3 angeordnet.

Das in Figur 2 gezeigte Beispiel unterscheidet sich vom Beispiel gemäß Figur 1 dadurch, dass der erste Planetensatz P1 und der zweite Planetensatz P2 zu einem Ravigneaux - Satz mit gemeinsamen Steg und gemeinsamen Hohlrad zusammengefasst bzw. reduziert sind, wobei der dritte Planetensatz P3 nicht wie gemäß Figur 1 zwischen dem ersten Planetensatz P1 und den radial übereinander angeordneten Planetensätzen P4/P2 angeordnet ist; die radial übereinander angeordneten Planetensätze P4/P2 sind zwischen dem ersten Planetensatz P1 und dem dritten Planetensatz P3 angeordnet.

Wie aus Figur 2 ersichtlich, ist die erste Kupplung 18 in Kraftflussrichtung im Zugbetrieb betrachtet vor dem ersten Planetensatz P1 angeordnet, wobei die erste Bremse 05 in Kraftflussrichtung im Zugbetrieb betrachtet vor dem ersten Planetensatz P1 angeordnet ist.

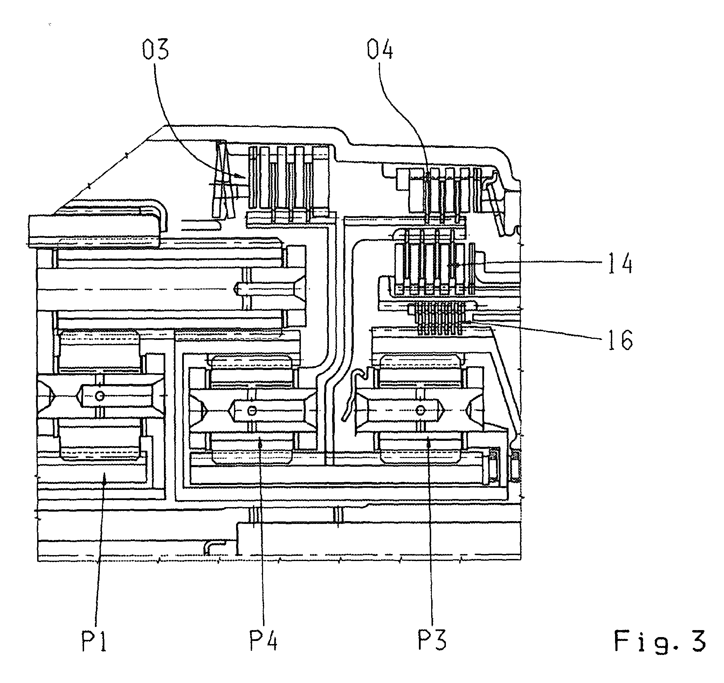

Des weiteren ist die dritte Kupplung 14 radial betrachtet unterhalb der zweiten Bremse 04 und im wesentlichen oberhalb des dritten Planetensatzes P3 angeordnet und kann mit der zweiten Bremse 04 einen gemeinsamen Innenlamellenträger aufweisen. Ferner kann die zweite Kupplung 16 radial betrachtet im wesentlichen unterhalb der dritten Kupplung 14 angeordnet sein, wie auch anhand Figur 3 veranschaulicht; hierbei ist die zweite Kupplung 16 radial betrachtet unterhalb der zweiten Kupplung 14 angeordnet.

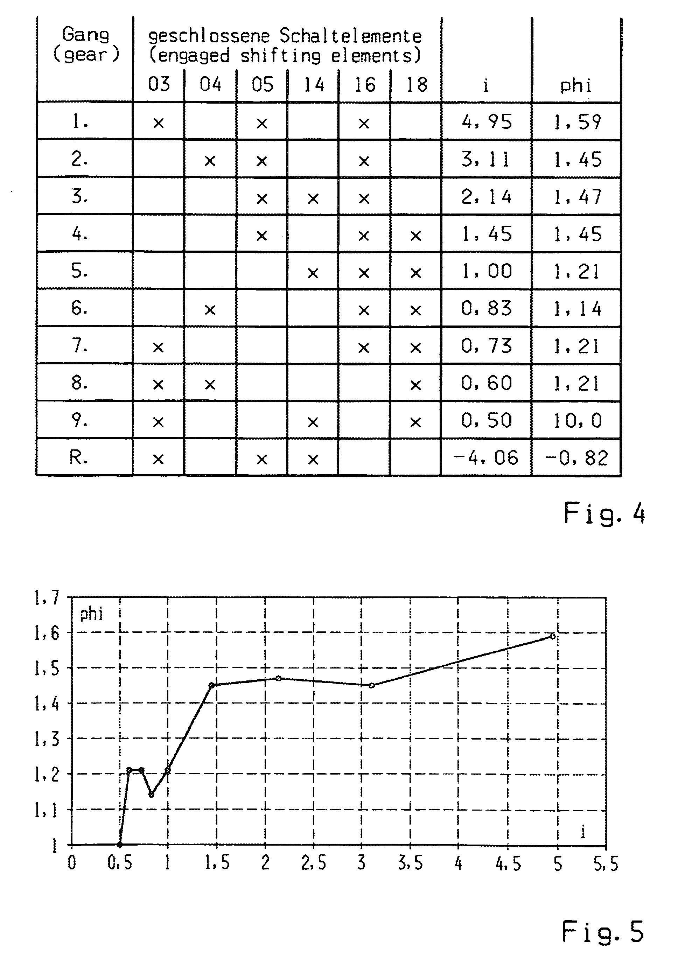

In Figur 4 ist ein beispielhaftes Schaltschema eines Mehrstufengetriebes gemäß Figuren 1, 2 und 3 dargestellt. Für jeden Gang werden drei Schaltelemente geschlossen. Dem Schaltschema können die jeweiligen Übersetzungen i der einzelnen Gangstufen und die daraus zu bestimmenden Gangsprünge bzw. Stufensprünge phi zum nächst höheren Gang beispielhaft entnommen werden, wobei der Wert 10,0 die Spreizung des Getriebes darstellt.

Typische Werte für die Standübersetzungen der Planetensätze P1, P2, P3 und P4 sind jeweils 3,20, -1,50, - 2,20 und -1,90. Aus Figur 4 wird ersichtlich, dass bei sequentieller Schaltweise Doppelschaltungen bzw. Gruppenschaltungen vermieden werden, da zwei benachbarte Gangstufen zwei Schaltelemente gemeinsam benutzen. Ferner wird ersichtlich, dass eine große Spreizung bei kleinen Gangsprüngen erzielt wird. Des weiteren können mit dem in Figur 1 gezeigten Getriebe insgesamt neun Vorwärts-Gänge und ein Rückwärts-Gang realisiert werden.

Die erste Bremse 05 und/oder die zweite Kupplung 16 sind vorzugsweise als Klauenschaltelemente ausgeführt. Dadurch werden die Schleppmomente des Getriebes, die aufgrund des geringen Abstandes zwischen den Reibflächen eines Reibschaltelementes im offenen Zustand und des darin enthaltenen Öls bzw. Luft-Öl -Gemisches entstehen, reduziert. Die übrigen Kupplungen 14, 18 und Bremsen 03, 04 sind vorzugsweise als Reibschaltelemente bzw. Lamellenschaltelemente ausgeführt.

Der erste Vorwärts-Gang ergibt sich durch Schließen der zweiten Kupplung 16 und der dritten und ersten Bremse 03, 05, der zweite Vorwärts-Gang durch Schließen der zweiten und ersten Bremse 04, 05 und der zweiten Kupplung 16, der dritte Vorwärts-Gang durch Schließen der zweiten und dritten Kupplung 14, 16 und der ersten Bremse 05, der vierte Vorwärts-Gang durch Schließen der ersten und zweiten Kupplung 18, 16 und der ersten Bremse 05, der fünfte Vorwärts-Gang durch Schließen der ersten, zweiten und dritten Kupplung 18, 16, 14, der sechste Vorwärts-Gang durch Schließen der zweiten Bremse 04 und der ersten und zweiten Kupplung 18, 16, der siebte Vorwärts-Gang durch Schließen der dritten Bremse 03 und der ersten und zweiten Kupplung 18, 16, der achte Vorwärts-Gang durch Schließen der dritten und zweiten Bremse 03, 04 und der ersten Kupplung 18 und der neunte Vorwärts-Gang durch Schließen der dritten Bremse 03 und der ersten und dritten Kupplung 18, 14. Der Rückwärtsgang ergibt sich durch Schließen der dritten und ersten Bremse 03, 05 und der dritten Kupplung 14.

Dadurch, dass im ersten Vorwärtsgang und im Rückwärtsgang die Bremsen 03 und 05 geschlossen sind, können diese Schaltelemente (als Reibschaltelemente bzw. Lamellenschaltelemente ausgeführt) als Anfahrelemente eingesetzt werden.

Gemäß der Erfindung können sich auch bei gleichem Getriebeschema je nach Schaltlogik unterschiedliche Gangsprünge ergeben, so dass eine anwendungs- bzw. fahrzeugspezifische Variation ermöglicht wird.

Ein Diagramm zur Veranschaulichung des der jeweiligen Übersetzung i eines Ganges entsprechenden Stufensprungs phi für das in Figuren 1, 2 und 3 gezeigte Getriebe entsprechend den in Figur 4 gezeigten Werten ist Gegenstand der Figur 5.

Erfindungsgemäß ist es möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Auf der Antriebsseite oder auf der Abtriebsseite können erfindungsgemäß ein Achsdifferential und/oder ein Verteilerdifferential angeordnet werden.

Im Rahmen einer vorteilhaften Weiterbildung kann die Antriebswelle 1 durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle 1 ständig mit der Kurbelwelle des Motors verbunden ist.

Das erfindungsgemäße Mehrstufengetriebe ermöglicht außerdem die Anordnung eines Torsionsschwingungsdämpfers zwischen Motor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z.B. ein hydraulischer oder elektrischer Retarder oder dergleichen, angeordnet sein, was insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Reibschaltelemente können als lastschaltende Kupplungen oder Bremsen ausgebildet sein. Insbesondere können kraftschlüssige Kupplungen oder Bremsen, wie z.B. Lamellenkupplungen, Bandbremsen und/oder Konuskupplungen, verwendet werden.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: erste Welle, Antriebswelle
- 2: zweite Welle, Abtriebswelle
- 3: dritte Welle
- 4: vierte Welle
- 5: fünfte Welle
- 6: sechste Welle
- 7: siebte Welle
- 8: achte Welle
- 03: dritte Bremse
- 04: zweite Bremse
- 05: erste Bremse
- 14: dritte Kupplung
- 16: zweite Kupplung
- 18: erste Kupplung
- P1: erster Planetensatz
- P2: zweiter Planetensatz
- P3: dritter Planetensatz
- P4: vierter Planetensatz
- i: Übersetzung
- phi: Stufensprung
- G: Gehäuse

## Patentansprüche

1. Mehrstufengetriebe in Planetenbauweise, insbesondere Automatgetriebe für ein Kraftfahrzeug, umfassend eine Antriebswelle (1), eine Abtriebswelle (2) und vier Planetensätze (P1, P2, P3, P4), welche in einem Gehäuse (G) angeordnet sind, insgesamt mindestens acht drehbare Wellen (1, 2, 3, 4, 5, 6, 7, 8) sowie sechs Schaltelemente (03, 04, 05, 14, 16, 18), umfassend Bremsen (03, 04, 05) und Kupplungen (14, 16, 18), deren selektives Eingreifen verschiedene Übersetzungsverhältnisse zwischen der Antriebswelle (1) und der Abtriebswelle (2) bewirkt, so dass neun Vorwärtsgänge und ein Rückwärtsgang realisierbar sind, wobei das Sonnenrad des ersten Planetensatzes (P1) mit der über eine erste Bremse (05) an das Gehäuse (G) des Getriebes ankoppelbaren fünften Welle (5) verbunden ist und der Steg des ersten Planetensatzes (P1) mit der achten Welle (8) verbunden ist, die mit dem Steg des zweiten Planetensatzes (P2) verbunden ist und über eine erste Kupplung (18) mit der Antriebswelle (1) lösbar verbindbar ist, wobei die Antriebswelle (1) über eine zweite Kupplung (16) mit der sechsten Welle (6) und über eine dritte Kupplung (14) mit der vierten Welle (4) lösbar verbindbar ist, wobei die sechste Welle (6) mit dem Hohlrad des dritten Planetensatzes (P3) verbunden ist und die vierte Welle (4) über eine zweite Bremse (04) an das Gehäuse (G) des Getriebes ankoppelbar ist und mit dem Sonnenrad des vierten Planetensatzes (P4) und dem Sonnenrad des dritten Planetensatzes (P3) verbunden ist, wobei das Hohlrad des ersten Planetensatzes (P1) mit der Abtriebswelle (2) verbunden ist, die mit dem Hohlrad des zweiten Planetensatzes (P2) verbunden ist, wobei der Steg des dritten Planetensatzes (P3) mit der siebten Welle (7) verbunden ist, die mit dem Bauteil verbunden ist, welches das Hohlrad des vierten Planetensatzes (P4) und das Sonnenrad des zweiten Planetensatzes (P2) miteinander verbindet und wobei der Steg des vierten Planetensatzes (P4) mit der dritten Welle (3) verbunden ist, die über eine dritte Bremse (03) an ein Gehäuse (G) des Getriebes ankoppelbar ist.

2. Mehrstufengetriebe nach Anspruch 1, **dadurch gekennzeichnet, dass** der zweite, dritte und vierte Planetensatz (P2, P3, P4) als Minus-Planetensätze ausgebildet sind, wobei der erste Planetensatz (P1) als Plus-Planetensatz ausgeführt ist.

3. Mehrstufengetriebe nach Anspruch 1 oder 2, **dadurch gekennzeichnet, dass** der zweite und der vierte Planetensatz (P2, P4) axial betrachtet in der gleichen Radsatzebene angeordnet sind, wobei der zweite Planetensatz (P2) radial betrachtet über dem vierten Planetensatz (P4) angeordnet ist, wodurch sich die insgesamt vier Planetensätze (P1, P2, P3, P4) räumlich axial betrachtet auf drei Radsatzebenen beschränken.

4. Mehrstufengetriebe nach einem der vorangehenden Ansprüche, **dadurch gekennzeichnet , dass** die erste Kupplung (18) in Kraftflussrichtung im Zugbetrieb betrachtet vor dem ersten Planetensatz (P1) angeordnet ist.

5. Mehrstufengetriebe nach einem der vorangehenden Ansprüche, **dadurch gekennzeichnet, dass** die erste Bremse (05) in Kraftflussrichtung im Zugbetrieb betrachtet vor dem ersten Planetensatz (P1) angeordnet ist.

6. Mehrstufengetriebe nach einem der vorangehenden Ansprüche, **dadurch gekennzeichnet, dass** die dritte Kupplung (14) radial betrachtet unterhalb der zweiten Bremse (04) angeordnet ist.

7. Mehrstufengetriebe nach einem der vorangehenden Ansprüche, **dadurch gekennzeichnet, dass** die dritte Kupplung (14) und die zweite Bremse (04) einen gemeinsamen Innenlamellenträger aufweisen.

8. Mehrstufengetriebe nach einem der vorangehenden Ansprüche, **dadurch gekennzeichnet , dass** der dritte Planetensatz (P3) zwischen dem ersten Planetensatz (P1) und den radial übereinander angeordneten Planetensätzen (P4/P2) angeordnet ist.

9. Mehrstufengetriebe nach Anspruch 8, **dadurch gekennzeichnet, dass** die zweite Kupplung (16) axial betrachtet zwischen dem ersten Planetensatz (P1) und dem dritten Planetensatz (P3) angeordnet ist.

10. Mehrstufengetriebe nach einem der vorangehenden Ansprüche 1 bis 7, **dadurch gekennzeichnet , dass** der erste Planetensatz (P1) und der zweite Planetensatz (P2) zu einem Ravigneaux - Satz mit gemeinsamen Steg und gemeinsamen Hohlrad zusammengefasst bzw. reduziert sind, wobei die radial übereinander angeordneten Planetensätze (P4/P2) zwischen dem ersten Planetensatz (P1) und dem dritten Planetensatz (P3) angeordnet sind.

11. Mehrstufengetriebe nach Anspruch 10, **dadurch gekennzeichnet, dass** die zweite Kopplung (16) radial betrachtet unterhalb der dritten Kupplung (14) angeordnet ist.

12. Mehrstufengetriebe nach einem der vorangehenden Ansprüche, **dadurch gekennzeichnet, dass** die erste Bremse (05) und/oder die zweite Kupplung (16) als Klauenschaltelemente ausgeführt sind, wobei die übrigen Kupplungen (14, 18) und Bremsen (03, 04) als Reibschaltelemente ausgeführt sind.

13. Mehrstufengetriebe nach einem der vorangehenden Ansprüche, **dadurch gekennzeichnet, dass** sich der erste Vorwärts-Gang durch Schließen der zweiten Kupplung (16) und der dritten und ersten Bremse (03, 05), der zweite Vorwärts-Gang durch Schließen der zweiten und ersten Bremse (04, 05) und der zweiten Kupplung (16), der dritte Vorwärts-Gang durch Schließen der zweiten und dritten Kupplung (14, 16) und der ersten Bremse (05), der vierte Vorwärts-Gang durch Schließen der ersten und zweiten Kupplung (18, 16) und der ersten Bremse (05), der fünfte Vorwärts-Gang durch Schließen der ersten, zweiten und dritten Kupplung (18, 16, 14), der sechste Vorwärts-Gang durch Schließen der zweiten Bremse (04) und der ersten und zweiten Kupplung (18, 16), der siebte Vorwärts-Gang durch Schließen der dritten Bremse (03) und der ersten und zweiten Kupplung (18, 16), der achte Vorwärts-Gang durch Schließen der dritten und zweiten Bremse (03, 04) und der ersten Kupplung (18) und der neunte Vorwärts-Gang durch Schließen der dritten Bremse (03) und der ersten und dritten Kupplung (18, 14) ergibt, und dass sich der Rückwärtsgang durch Schließen der dritten und ersten Bremse (03, 05) und der dritten Kupplung (14) ergibt.

14. Mehrstufengetriebe nach einem der vorangehenden Ansprüche, **dadurch gekennzeichnet, dass** das Anfahren mittels der dritten oder der ersten Bremse (03, 05) des Getriebes erfolgt.

## Claims

1. Multi-stage gearbox of planetary construction, in particular automatic gearbox for a motor vehicle, comprising a drive input shaft (1), a drive output shaft (2) and four planetary gear sets (P1, P2, P3, P4) which are arranged in a housing (G), a total of at least eight rotatable shafts (1, 2, 3, 4, 5, 6, 7, 8), and six shift elements (03, 04, 05, 14, 16, 18) comprising brakes (03, 04, 05) and clutches (14, 16, 18), the selective engagement of which realizes different transmission ratios between the drive input shaft (1) and the drive output shaft (2) such that nine forward gears and one reverse gear can be realized, wherein the sun gear of the first planetary gear set (P1) is connected to the fifth shaft (5), which can be coupled by means of a first brake (05) to the housing (G) of the gearbox, and the web of the first planetary gear set (P1) is connected to the eighth shaft (8), which is connected to the web of the second planetary gear set (P2) and which can be releasably connected by means of a first clutch (18) to the drive input shaft (1), wherein the drive input shaft (1) can be releasably connected by means of a second clutch (16) to the sixth shaft (6) and by means of a third clutch (14) to the fourth shaft (4), wherein the sixth shaft (6) is connected to the internal gear of the third planetary gear set (P3) and the fourth shaft (4) can be coupled by means of a second brake (04) to the housing (G) of the gearbox and is connected to the sun gear of the fourth planetary gear set (P4) and to the sun gear of the third planetary gear set (P3), wherein the internal gear of the first planetary gear set (P1) is connected to the drive output shaft (2), which is connected to the internal gear of the second planetary gear set (P2), wherein the web of the third planetary gear set (P3) is connected to the seventh shaft (7), which is connected to the component which connects the internal gear of the fourth planetary gear set (P4) and the sun gear of the second planetary gear set (P2) to one another, and wherein the web of the fourth planetary gear set (P4) is connected to the third shaft (3), which can be coupled by means of a third brake (03) to a housing (G) of the gearbox.

2. Multi-stage gearbox according to Claim 1, **characterized in that** the second, third and fourth planetary gear sets (P2, P3, P4) are formed as minus planetary gear sets, wherein the first planetary gear set (P1) is designed as a plus planetary gear set.

3. Multi-stage gearbox according to Claim 1 or 2, **characterized in that** the second and the fourth planetary gear set (P2, P4) are arranged in the same wheel set plane as viewed axially, wherein the second planetary gear set (P2) is arranged above the fourth planetary gear set (P4) as viewed radially, as a result of which the total of four planetary gear sets (P1, P2, P3, P4) are restricted spatially to three wheel set planes as viewed axially.

4. Multi-stage gearbox according to one of the preceding claims, **characterized in that** the first clutch (18) is arranged upstream of the first planetary gear set (P1) as viewed in the power flow direction during traction operation.

5. Multi-stage gearbox according to one of the preceding claims, **characterized in that** the first brake (05) is arranged upstream of the first planetary gear set (P1) as viewed in the power flow direction during traction operation.

6. Multi-stage gearbox according to one of the preceding claims, **characterized in that** the third clutch (14) is arranged below the second brake (04) as viewed radially.

7. Multi-stage gearbox according to one of the preceding claims, **characterized in that** the third clutch (14) and the second brake (04) have a common inner plate carrier.

8. Multi-stage gearbox according to one of the preceding claims, **characterized in that** the third planetary gear set (P3) is arranged between the first planetary gear set (P1) and the planetary gear sets (P4/P2) which are arranged radially one above the other.

9. Multi-stage gearbox according to Claim 8, **characterized in that** the second clutch (16) is arranged between the first planetary gear set (P1) and the third planetary gear set (P3) as viewed axially.

10. Multi-stage gearbox according to one of the preceding Claims 1 to 7, **characterized in that** the first planetary gear set (P1) and the second planetary gear set (P2) are combined or reduced to form a Ravigneaux set with a common web and common internal gear, wherein the planetary gear sets (P4/P2) which are arranged radially one above the other are arranged between the first planetary gear set (P1) and the third planetary gear set (P3).

11. Multi-stage gearbox according to Claim 10, **characterized in that** the second clutch (16) is arranged below the third clutch (14) as viewed radially.

12. Multi-stage gearbox according to one of the preceding claims, **characterized in that** the first brake (05) and/or the second clutch (16) are designed as claw-type shift elements, wherein the other clutches (14, 18) and brakes (03, 04) are designed as friction-type shift elements.

13. Multi-stage gearbox according to one of the preceding claims, **characterized in that** the first forward gear is realized by closing the second clutch (16) and the third and the first brake (03, 05), the second forward gear is realized by closing the second and the first brake (04, 05) and the second clutch (16), the third forward gear is realized by closing the second and the third clutch (14, 16) and the first brake (05), the fourth forward gear is realized by closing the first and the second clutch (18, 16) and the first brake (05), the fifth forward gear is realized by closing the first, the second and the third clutch (18, 16, 14), the sixth forward gear is realized by closing the second brake (04) and the first and the second clutch (18, 16), the seventh forward gear is realized by closing the third brake (03) and the first and the second clutch (18, 16), the eighth forward gear is realized by closing the third and the second brake (03, 04) and the first clutch (18), and the ninth forward gear is realized by closing the third brake (03) and the first and the third clutch (18, 14), and **in that** the reverse gear is realized by closing the third and the first brake (03, 05) and the third clutch (14).

14. Multi-stage gearbox according to one of the preceding claims, **characterized in that** starting is performed by means of the third or the first brake (03, 05) of the gearbox.

## Revendications

1. Boîte de vitesses à plusieurs étages de construction planétaire, en particulier boîte de vitesses automatique pour un véhicule automobile, comprenant un arbre d'entraînement (1), un arbre de sortie (2) et quatre trains planétaires (P1, P2, P3, P4) qui sont disposés dans un boîtier (G), dans l'ensemble au moins huit arbres rotatifs (1, 2, 3, 4, 5, 6, 7, 8) ainsi que six éléments de commutation (03, 04, 05, 14, 16, 18), comprenant des freins (03, 04, 05) et des embrayages (14, 16, 18), dont l'engagement sélectif provoque différents rapports de démultiplication entre l'arbre d'entraînement (1) et l'arbre de sortie (2), de sorte que neuf vitesses de marche avant et une vitesse de marche arrière puissent être réalisées, la roue solaire du premier train planétaire (P1) étant connectée au cinquième arbre (5) pouvant être accouplé au boîtier (G) de la boîte de vitesses par le biais d'un premier frein (05), et le porte-satellites du premier train planétaire (P1) étant connecté au huitième arbre (8) qui est connecté au porte-satellites du deuxième train planétaire (P2) et qui peut être connecté de manière amovible par le biais d'un premier embrayage (18) à l'arbre d'entraînement (1), l'arbre d'entraînement (1) pouvant être connecté de manière amovible par le biais d'un deuxième embrayage (16) au sixième arbre (6) et par le biais d'un troisième embrayage (14) au quatrième arbre (4), le sixième arbre (6) étant connecté à la couronne dentée du troisième train planétaire (P3) et le quatrième arbre (4) pouvant être accouplé par le biais d'un deuxième frein (04) au boîtier (G) de la boîte de vitesses et étant connecté à la roue solaire du quatrième train planétaire (P4) et à la roue solaire du troisième train planétaire (P3), la couronne dentée du premier train planétaire (P1) étant connectée à l'arbre de sortie (2) qui est connecté à la couronne dentée du deuxième train planétaire (P2), le porte-satellites du troisième train planétaire (P3) étant connecté au septième arbre (7) qui est connecté au composant qui relie l'un à l'autre la couronne dentée du quatrième train planétaire (P4) et la roue solaire du deuxième train planétaire (P2), et le porte-satellites du quatrième train planétaire (P4) étant connecté au troisième arbre (3) qui peut être accouplé par le biais d'un troisième frein (03) à un boîtier (G) de la boîte de vitesses.

2. Boîte de vitesses à plusieurs étages selon la revendication 1, **caractérisée en ce que** les deuxième, troisième et quatrième trains planétaires (P2, P3, P4) sont réalisés sous forme de trains planétaires négatifs, le premier train planétaire (P1) étant réalisé sous forme de train planétaire positif.

3. Boîte de vitesses à plusieurs étages selon la revendication 1 ou 2, **caractérisée en ce que** les deuxième et quatrième trains planétaires (P2, P4), considérés axialement, sont disposés dans le même plan de train de roues, le deuxième train planétaire (P2), considéré radialement, étant disposé au-dessus du quatrième train planétaire (P4), de sorte que les quatre trains planétaires (P1, P2, P3, P4) au total, considérés axialement dans l'espace, sont limités à trois plans de train de roues.

4. Boîte de vitesses à plusieurs étages selon l'une quelconque des revendications précédentes, **caractérisée en ce que** le premier embrayage (18), considéré dans la direction du flux de force en mode de traction, est disposé avant le premier train planétaire (P1).

5. Boîte de vitesses à plusieurs étages selon l'une quelconque des revendications précédentes, **caractérisée en ce que** le premier frein (05), considéré dans la direction du flux de force en mode de traction, est disposé avant le premier train planétaire (P1).

6. Boîte de vitesses à plusieurs étages selon l'une quelconque des revendications précédentes, **caractérisée en ce que** le troisième embrayage (14), considéré radialement, est disposé sous le deuxième frein (04).

7. Boîte de vitesses à plusieurs étages selon l'une quelconque des revendications précédentes, **caractérisée en ce que** le troisième embrayage (14) et le deuxième frein (04) présentent un support de disques internes commun.

8. Boîte de vitesses à plusieurs étages selon l'une quelconque des revendications précédentes, **caractérisée en ce que** le troisième train planétaire (P3) est disposé entre le premier train planétaire (P1) et les trains planétaires (P4/P2) disposés radialement l'un au-dessus de l'autre.

9. Boîte de vitesses à plusieurs étages selon la revendication 8, **caractérisée en ce que** le deuxième embrayage (16), considéré axialement, est disposé entre le premier train planétaire (P1) et le troisième train planétaire (P3).

10. Boîte de vitesses à plusieurs étages selon l'une quelconque des revendications précédentes 1 à 7, **caractérisée en ce que** le premier train planétaire (P1) et le deuxième train planétaire (P2) sont réunis ou réduits à un engrenage planétaire de Ravigneaux avec un porte-satellites commun et une couronne dentée commune, les trains planétaires (P4/P2) disposés radialement l'un au-dessus de l'autre étant disposés entre le premier train planétaire (P1) et le troisième train planétaire (P3) .

11. Boîte de vitesses à plusieurs étages selon la revendication 10, **caractérisée en ce que** le deuxième embrayage (16), considéré radialement, est disposé sous le troisième embrayage (14).

12. Boîte de vitesses à plusieurs étages selon l'une quelconque des revendications précédentes, **caractérisée en ce que** le premier frein (05) et/ou le deuxième embrayage (16) sont réalisés sous forme d'éléments de commutation à griffes, les autres embrayages (14, 18) et freins (03, 04) étant réalisés sous forme d'éléments de commutation à friction.

13. Boîte de vitesses à plusieurs étages selon l'une quelconque des revendications précédentes, **caractérisée en ce que** la première vitesse de marche avant est obtenue par fermeture du deuxième embrayage (16) et du troisième et du premier frein (03, 05), la deuxième vitesse de marche avant est obtenue par fermeture du deuxième et du premier frein (04, 05) et du deuxième embrayage (16), la troisième vitesse de marche avant est obtenue par fermeture du deuxième et du trois embrayage (14, 16) et du premier frein (05), la quatrième vitesse de marche avant est obtenue par fermeture du premier et du deuxième embrayage (18, 16) et du premier frein (05), la cinquième vitesse de marche avant est obtenue par fermeture du premier, deuxième et troisième embrayage (18, 16, 14), la sixième vitesse de marche avant est obtenue par fermeture du deuxième frein (04) et du premier et du deuxième embrayage (18, 16), la septième vitesse de marche avant est obtenue par fermeture du troisième frein (03) et du premier et du deuxième embrayage (18, 16), la huitième vitesse de marche avant est obtenue par fermeture du troisième et du deuxième frein (03, 04) et du premier embrayage (18) et la neuvième vitesse de marche avant est obtenue par fermeture du troisième frein (03) et du premier et troisième embrayage (18, 14), et **en ce que** la vitesse de marche arrière est obtenue par fermeture du troisième et du premier frein (03, 05) et du troisième embrayage (14).

14. Boîte de vitesses à plusieurs étages selon l'une quelconque des revendications précédentes, **caractérisée en ce que** le démarrage s'effectue au moyen du troisième ou du premier frein (03, 05) de la transmission.
